# EUROPEAN PATENT SPECIFICATION

(11) **EP 2 763 389 B1**
(45) Date of publication and mention of the grant of the patent: **20.11.2019**
(21) Application number: 14152176.5
(22) Date of filing: 22.01.2014
(51) Int. Cl.: H04N 1/028, H04N 1/047, H04N 1/113, G06K 15/12, H04N 1/053, G03G 15/043

(54) **Light scanning unit, method of detecting failure of synchronization signal, and electrophotographic image forming apparatus using light scanning unit**
Lichtabtasteinheit, Verfahren zur Erkennung des Defekts eines Synchronisationssignals und elektrofotografische Bilderzeugungsvorrichtung mit Lichtabtasteinheit
Unité de balayage de lumière, procédé de détection de défaillance d'un signal de synchronisation et appareil de formation d'image électrophotographique utilisant une unité de balayage de lumière

(30) Priority: 31.01.2013 KR 20130011489
(43) Date of publication of application: 06.08.2014
(73) Proprietor: HP Printing Korea Co., Ltd., Gyeonggi-do 16677 (KR)
(72) Inventor: Hwang, Ho-hyun, Gyeonggi-do (KR)
(74) Representative: Taor, Simon Edward William

(56) References cited:
- EP-A1- 1 085 743
- EP-A1- 1 970 748
- EP-A2- 0 366 037
- JP-A- 2002 341 272
- JP-A- 2004 163 666
- JP-A- 2007 226 129

## Description

Embodiments relate to a light scanning unit, a method of detecting a failure of a synchronization signal, and an electrophotographic image forming apparatus using the light scanning unit, and more particularly, to a light scanning unit with an improved synchronization detection structure, a method of detecting a failure of a synchronization signal, and an electrophotographic image forming apparatus using the light scanning unit.

### BACKGROUND

A light scanning unit is applied to an electrophotographic image forming apparatus, such as a laser printer, a digital copier, a fax machine, or the like. The light scanning unit deflects a light beam irradiated from a light source to which an image signal is applied, to scan the light beam in a main scanning direction of an image holding body. An electrostatic latent image is formed on the image holding body via the main scanning of the light scanning unit and sub scanning performed by a movement of the image holding body.

If scanning position of the light beam scanned on the image holding body is varied in each scan line in the electrophotographic image forming apparatus, an image shift occurs and, in case that a color image is to be formed, a position at which colors overlap with each other wobbles. Therefore, the light scanning unit includes a synchronization detector to determine starting and ending positions of light scanning. The synchronization detector is positioned at a starting or ending end of the light beam that is repeatedly scanned to generate a horizontal synchronization signal of the light scanning.

In a process of assembling the light scanning unit, a position deviation may occur in a sub scanning direction of a light beam incident into a synchronization sensor of the synchronization detector. Therefore, in order to prevent a position deviation of a synchronization signal in the sub scanning direction, a position of a beam in the synchronization sensor is measured or inspected in the process of assembling the light scanning unit. Also, a housing of the light scanning unit is thermally deformed due to a user environment/temperature condition difference or may be changed under a different optical axis condition from an initial assembled state of the light scanning unit due to a shock applied during transporting of a product or a careless use of the product. This optical axis change causes image deterioration and a deviation of a light beam incident into the synchronization detector. In addition, if synchronization detecting lenses are reduced to reduce cost, the above-described problem is more remarkable.

In order to improve a market failure as described above, an equipment operator inspects a position of a beam incident into the synchronization sensor with his eyes by using an additional infrared camera module which adds to equipment and limits a position of a sub scanning direction optical axis within a predetermined range.

However, the cost and the number of work processes increase due to the installation of the infrared camera module, thereby increasing production cost. Also, there is a failure possibility due to human error of a worker.

JP 2004163666 discloses an optical scanner including detecting part for generating a synchronization signal and for generating a detecting signal for detecting the deviation of a light beam.

EP 0366037 discloses an image recorder in which a recording photobeam and a reference photobeam are periodically reflected by a polygon mirror in a main scanning direction.

JP2007226129 discloses a light receiving face of photodetecting sensors, which receive light beams scanned with a scanning optical system, which has a shape that the width in a main scanning direction varies from the central part in a subscanning direction to the other parts.

In an aspect of one or more embodiments, there is provided a light scanning unit which automatically measures an optical axis of a synchronization detector and evaluates a failure in real time without adding an additional module to equipment, a method of detecting a failure of a synchronization signal, and an electrophotogaphic image forming apparatus using the light scanning unit.

According to an aspect of the invention, there is provided a light scanning unit according to claims 1 or 2.

According to another aspect of the invention, there is provided a method of detecting a failure of a synchronization signal of a light scanning unit according to claims 3 or 4.

According to another aspect of the invention, there is provided an electrophotographic image forming apparatus according to claim 5.

### BRIEF DESCRIPTION OF THE DRAWINGS

The above aspects will become more apparent by describing 1 exemplary embodiments thereof with reference to the attached drawings in which:
FIG. 1 is a schematic view illustrating an optical structure of a light scanning unit according to an exemplary embodiment;
FIG. 2 is a view illustrating a synchronization detector seen from line I-I of FIG. 1;
FIG. 3 is a view illustrating a process of detecting a failure of a synchronization signal of the light scanning unit of FIG. 1;
FIG. 4 is a view illustrating a synchronization signal generated from a light beam scanned to a synchronization detector;
FIG. 5 is a schematic view illustrating a synchronization detector according to another exemplary embodiment;
FIG. 6 is a schematic view illustrating a synchronization detector according to an exemplary embodiment;
FIG. 7 is a schematic view illustrating a synchronization sensor according to another exemplary embodiment; and
FIG. 8 is a schematic view illustrating an electrophotographic image forming apparatus using light scanning units, according to an exemplary embodiment.

### DETAILED DESCRIPTION

Reference will now be made in detail to embodiments, examples of which are illustrated in the accompanying drawings, wherein like reference numerals refer to the like elements throughout. Embodiments are described below by referring to the figures. The thicknesses of layers and regions are exaggerated for clarity.

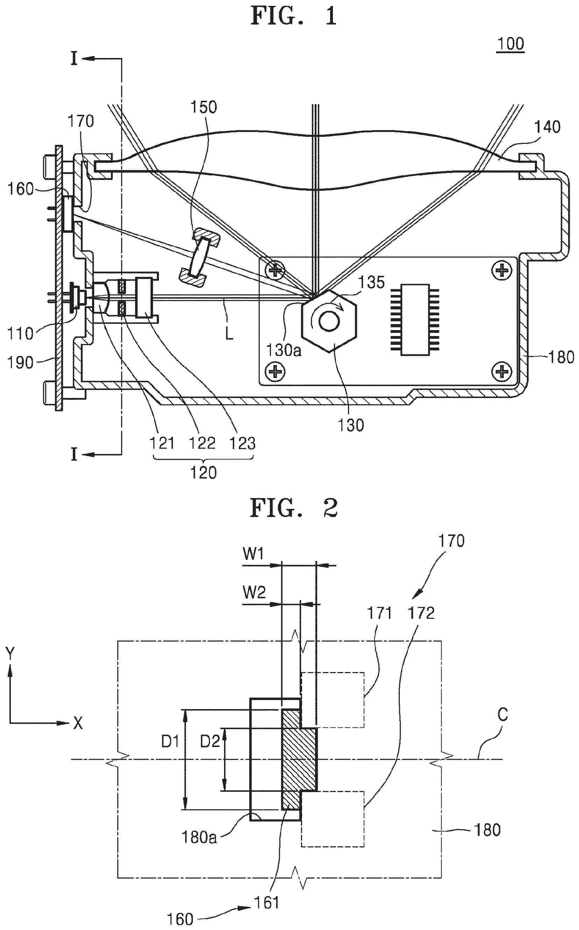

FIG. 1 is a schematic view illustrating an optical structure of a light scanning unit 100 according to an exemplary embodiment. FIG. 2 is a view illustrating a synchronization detector seen from line I-I of FIG. 1.

Referring to FIGS. 1 and 2, the light scanning unit (light scanner) 100 according to an exemplary embodiment includes a light source 110, a light deflector 130, a scanning lens 140, a synchronization sensor 160, and a housing 180. The light source 110 emits a light beam L, and the light deflector 130 deflects the light beam L emitted from the light source 110 onto a to-be-scanned surface in a main scanning direction. The scanning lens 140 images the light beam L reflected and scanned from the light deflector 130 on the to-be-scanned surface. The synchronization sensor 160 receives a portion of the light beam L reflected and scanned from the light deflector 130 to detect a horizontal synchronization signal, and the housing 180 houses these optical parts.

The light source 110 may be a laser diode. The light deflector 130 may be a polygon mirror having a plurality of reflective surfaces. As the light deflector 130 rotates in a clockwise direction 135, the light beam L emitted from the light source 110 is reflected and scanned toward the to-be-scanned surface. As other example, the light deflector 130 may be a Microelectromechanical Systems (MEMS) mirror.

An incident optical system 120 is provided on an optical path between the light source 11 and the light deflector 130. The incident optical system 120 includes at least one of a collimator lens 121, an aperture stop 122, and a cylindrical lens 123. The collimator lens 121 is a condensing lens which forms the light beam L emitted from the light source 110 into a parallel light beam or a convergent light beam. The aperture stop 122 adjusts a diameter and a shape of the light beam L. The cylindrical lens 123 is an anamorphic lens which focuses the light beam L in the main scanning direction and/or a sub scanning direction to linearly image the light beam L on the reflective surfaces of the light deflector 130.

The scanning lens 140 is an image forming optical system which images the light beam L reflected and scanned from the light deflector 130 on the to-be-scanned surface and is disposed on a path of the light beam L deflected from the light deflector 130. The scanning lens 140 may be an fθ lens which focuses the light beam L and corrects the light beam L to scan the light beam L onto the to-be-scanned surface at a constant velocity. A single scanning lens 140 is shown in the drawings but embodiments are not limited thereto. Therefore, two or more scanning lens 140 may be included. A reflection mirror (not shown) may be further interposed on the path of the light beam L deflected from the light deflector 130 to appropriately change a light path.

The synchronization sensor 160 is a device which detects a portion of the light beam L reflected and scanned from the light deflector 130 to the horizontal synchronization signal, e.g., may be a photodiode, a photo sensor integrated chip (IC), or the like. The synchronization sensor 160 has a light-receiving surface 161 which receives the light beam L. The synchronization sensor 160 is disposed to receive a light beam corresponding to a starting end of a scanning line of a light beam at which horizontal scanning starts. The synchronization sensor 160 may be disposed to receive a light beam corresponding to an ending end of the scanning line of the light beam at which the horizontal scanning ends or may be disposed at both the starting and ending ends of the scanning line of the light beam.

The synchronization sensor 160 is installed in the housing 180 of the light scanning unit 100 by being mounted on a circuit board 190 so that the light-receiving surface 161 of the synchronization sensor 160 receives the light L. A blocking member 170 is installed on a front surface of the synchronization sensor 160. The synchronization sensor 160 and the blocking member 170 form the synchronization detector of the light scanning unit 100. The blocking member 170 varies a width of a main scanning direction of an effective light-receiving surface of the synchronization sensor 160 according to a sub scanning direction.

FIG. 2 is a view illustrating the light-receiving surface 161 of the synchronization sensor 160 and the blocking member 170, seen from line I-I of the housing 180. In FIG. 2, an axis X denotes a direction in which the light beam L is scanned, i.e., a main scanning direction, and a Y axis denotes a sub scanning direction Y perpendicular to the main scanning direction X. Also, C denotes a central line of an advancing path of the light beam L. The central line C is an advancing path of the light beam L if an optical axis of the light scanning unit 100 is well arranged.

Referring to FIG. 2, an opening 180a is formed in a front surface on which the light-receiving surface 161 of the synchronization sensor 160 of the housing 180 is positioned, to allow the light beam L to be incident onto the light-receiving surface 161.

The opening 180a of the housing 180 is formed to cover at least a part of an end side of the light-receiving surface 161 of the synchronization sensor 160 with respect to the advancing direction of the light beam L. The opening 180a is formed with a difference to vary a width of the main scanning direction X according to the sub scanning direction Y. Stepped shapes 171 and 172 at the opening 180a of the housing 180 may correspond to the blocking member 170 of an exemplary embodiment. The stepped shapes 171 and 172 of the blocking member 170 may be a shape of the opening 180a of the housing 180. In other words, the blocking member of an exemplary embodiment may form a single body with the housing 180. The opening 180a of the housing 180 may be formed in a rectangular shape, and an additional opaque member may be added to a side of the opening 180a to form the stepped shapes 171 and 172 of the blocking member 170.

The stepped shapes 171 and 172 of the blocking member 170 are formed at ends of the opening 180a of the housing 180 with respect to the advancing direction of the light beam L. In other words, the stepped shapes 171 and 172 in the opening 180a of the housing 180 may be boundaries of the end side of the opening 180a with respect to the advancing direction of the light beam L.

The stepped shapes 171 and 172 of the blocking member 170 are symmetrical to each other in the sub scanning direction Y with respect to the central line C of the advancing path of the light beam L. In other words, the stepped shapes 171 and 172 keep a distance from each other in the sub scanning direction Y with respect to the central line C.

An effective width W2 of the light-receiving surface 161 covered by the stepped shapes 171 and 172 of the blocking member 170 in the main scanning direction X may be determined by a reference value for determining a failure of a synchronization signal of the light scanning unit 100 assembled as will be described later.

Since the light-receiving surface 161 of the synchronization sensor 160 is covered with the stepped shapes 171 and 172 of the blocking member 170, the effective width W2 of the light-receiving surface 161 in the main scanning direction X becomes narrower than an original width W1 of the light-receiving surface 161 of the synchronization sensor 160 in the main scanning direction X. Since an original distance D1 of the light-receiving surface 161 in the sub scanning direction Y is covered with the stepped shapes 171 and 172 of the blocking member 170, a length, which keeps the original width W1 of the light-receiving surface 161 in the main scanning direction X, is also reduced to a distance D2. Here, the effective width W2 reduced by the stepped shapes 171 and 172 of the blocking member 170 may be formed so as to satisfy a width of a minimum main synchronization signal from which a horizontal synchronization signal may be detected by the synchronization sensor 160. For example, if the width of the minimum horizontal synchronization signal from which the horizontal synchronization signal may be stably detected by the synchronization sensor 160 is 1µs, the reduced width W2 may be designed to be equal to or wider than a distance by which the scanned light beam L advances. Therefore, although the distance D1 of the light-receiving surface 161, which keeps the original width W1 of the light-receiving surface 161 in the main scanning direction X, is reduced to the distance D2, the horizontal synchronization signal may be detected throughout the original distance Di in the sub scanning direction Y.

The boundary of a front side of the synchronization sensor 160 with respect to the advancing direction of the light beam L may be disposed to be orthogonal to the main scanning direction X of the light beam L. In addition, the boundary of the front side of the light-receiving surface 161 of the synchronization sensor 160 may be formed in a straight-line shape. Here, the opening 180a of the housing 180 may be formed so as not to cover the boundary of the front side of the light-receiving surface 161 of the synchronization sensor 160. Therefore, although the light beam L is scanned in the sub scanning direction Y at different positions, the synchronization signal may be detected at the same time.

In other case, the opening 180a of the housing 180 may be formed to cover and block the boundary of the front side of the light-receiving surface 161 of the synchronization sensor 160. In this case, the boundary of the front side of the opening 180a may be formed in the straight-line shape.

An electronic part (not shown), which processes the horizontal synchronization signal generated by the synchronization sensor 160, may be further provided on the circuit board 190 on which the synchronization sensor 160 is mounted. The light source 110 may be mounted on the circuit board 190 together with the electronic part at a time to reduce the number of assembling processes. The light source 110 may be additionally installed according to a method of assembling the light scanning unit 100.

A synchronization detecting lens 150 is disposed between the light deflector 130 and the synchronization sensor 160. The synchronization detecting lens 150 may be a focusing lens that focuses the light beam L reflected from the light deflector 130 onto the synchronization sensor 160.

Although not shown in the drawings, the synchronization sensor 160 is disposed to detect the light beam L that does not pass through the scanning lens 140 but embodiments are not limited thereto. The synchronization sensor 160 may be disposed to detect the light beam L that has passed through the scanning lens 140.

An operation of the light scanning unit 100 of an exemplary embodiment will now be described with reference to FIGS. 1 and 2.

The light source 110 and the light deflector 130 are driven. When the light beam L is emitted from the light source 110, the emitted light beam L is reflected from a reflective surface 130a of the light deflector 130 to be scanned in a main scanning direction according to a rotation of the light deflector 130. Here, the light beam L scanned from one reflective surface of the light deflector 130 forms one scan line on the to-be-scanned surface. The light beam L corresponding to a starting end of the scanning line is incident onto the light-receiving surface 161 of the synchronization sensor 160 through the synchronization detecting lens 150 and the opening 180a of the housing 180. Here, the light beam L forms the scanning line on the synchronization sensor 160 in the main scanning direction X. The light beam L incident onto the light-receiving surface 161 of the synchronization sensor 160 is converted into a horizontal synchronization signal through a photoelectric conversion.

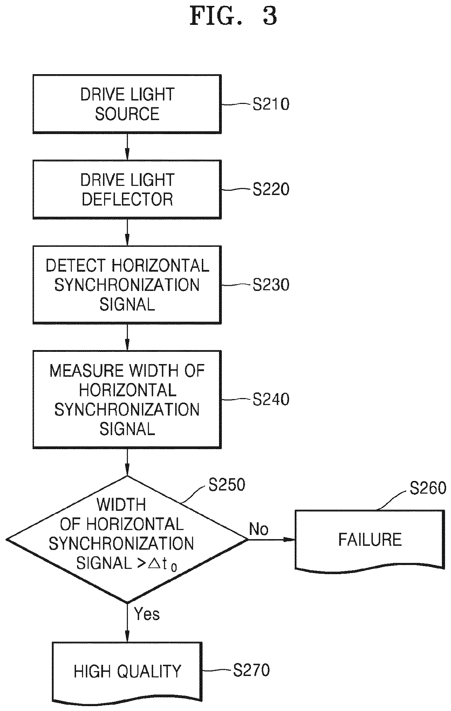

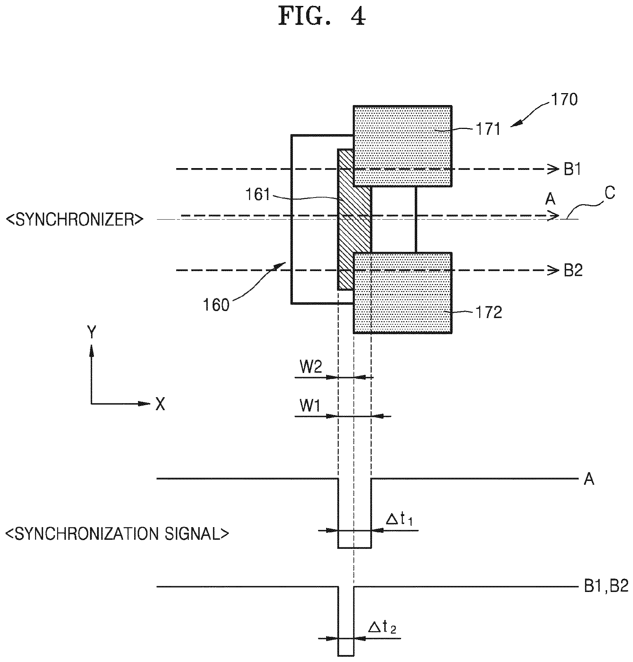

A method of detecting a failure of a synchronization signal of the light scanning unit 100, according to an exemplary embodiment, will now be described with reference to FIGS. 3 and 4.

The method of detecting a failure of a synchronization signal of the light scanning unit 100, according to an exemplary embodiment, may be a part of an assembling process of the light scanning unit 100. A position deviation of the light beam L incident onto the synchronization sensor 160 may occur in a sub scanning direction Y in the process of assembling the light scanning unit 100. Therefore, a position of the light beam L in the synchronization sensor 160 is to be measured or inspected during the process of assembling the light scanning unit 100 in order to prevent the position deviation of the synchronization signal in the sub scanning direction Y. Also, the housing 180 of the light scanning unit 100 may be thermally deformed due to a user environment/temperature condition difference or may be changed under a different optical axis condition from an initial assembled state of the light scanning unit 100 due to a shock applied during transporting of a product or a careless use of the product.

This optical axis change causes image deterioration or a deviation of a light beam incident onto the synchronization sensor 160. In addition, if the synchronization detecting lens 150 is omitted to reduce production cost, the above-described problem may be more remarkable. In order to improve this failure, in the method of detecting a failure of a synchronization signal of the light scanning unit 10, after synchronization signal-related parts are completely mounted in the housing 180 of the light scanning unit 100, the light scanning unit 100 is driven to evaluate a synchronization signal sensed by the synchronization sensor 160.

FIG. 3 is a view illustrating a process of detecting a failure of a synchronization signal of the light scanning unit 100, according to an exemplary embodiment. FIG. 4 is a view illustrating a synchronization signal generated from a light beam scanned onto the synchronization detector.

Referring to FIG. 4, optical parts of the light scanning unit 100 are mounted and installed in the housing 180, and then a test image signal is input to detect a failure of a synchronization signal. A test module (not shown), which receives a horizontal synchronization signal detected by the synchronization sensor 160, is engaged with the light scanning unit 100 that has been completely assembled.

In operation S210, the light source is driven. In operation S220, the light deflector 130 is driven. In operation S230, the horizontal synchronization signal is detected by sensing by the synchronization sensor 160. In operation S240, a width of the detected horizontal synchronization signal is measured. In operation S250, the measured width of the horizontal synchronization signal is compared with a reference value Δto. The reference value Δto is criterion for determining a high quality or a failure of the synchronization signal of the light scanning unit 100.

As shown in FIG. 4, if a light beam A passes around a central line C of the synchronization detector, i.e., an area that is not covered with the blocking member 170, an original width W1 of the light-receiving surface 161 of the synchronization sensor 160 may be effectively used to detect the light beam L. Therefore, a width of a detected synchronization signal may be Δt1. In other words, if the width of the horizontal synchronization signal is greater than the reference value Δto, a light beam incident onto the light-receiving surface 161 of the synchronization sensor 160 through the opening 180a of the housing 180 may be construed as being incident in a preset correct position. Therefore, the assembled light scanning unit 100 is determined as high quality in operation S270. If light beams B1 and B2 pass through an area whose part deviates much from the central line C toward a sub scanning direction Y to be covered with the blocking member 170, a reduced width W2 of the light-receiving surface 161 of the synchronization sensor 160 may be effectively used to detect the light beam L. As a result, the width of the detected synchronization signal may be Δt2. In other words, if the width of the synchronization signal is smaller than the reference value Δto, a light beam incident onto the light-receiving surface 161 of the synchronization sensor 160 through the opening 180a of the housing 180 may be construed as being incident deviating from the preset correct position. Therefore, the assembled light scanning unit 100 is determined as a failure in operation S260.

Referring to FIG. 3 again, the reference value Δto may be set to a value that is equal to or greater than the width Δt2 of the synchronization signal corresponding to the width W2 of the light-receiving surface 161 of the reduced blocking member 170 in the main scanning direction X and is smaller than the width Δt1 of the synchronization signal corresponding to the original width W1 of the light-receiving surface 161.

The light beam L incident onto the synchronization sensor 160 may deviate from the central line C toward the sub scanning direction Y due to changes of positions of the optical parts that are caused by an assembling failure or a use environment. If the light beam L passes through adjacent to the central line C, i.e., an area that is not covered with the blocking member 170, the light scanning unit 100 is determined as high quality. If the light beams B1 and B2 deviate much from the central line C of the synchronization detector toward the sub scanning direction Y and pass through an area whose part is covered with the blocking member 170, the light scanning unit 100 is determined as a failure.

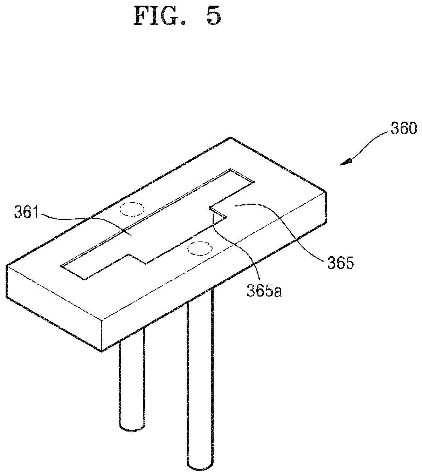

The blocking member 170 described in the previous exemplary embodiment corresponds to an example and may be modified into various forms as shown in FIGS. 5 through 7.

FIG. 5 is a schematic view illustrating a synchronization detector according to an embodiment. Referring to FIG. 5, the synchronization detector is a synchronization sensor 360 in which an opening 365 of a housing 365a of the synchronization sensor 360 of an exemplary embodiment is formed with a step difference, and a width of a light-receiving surface 361 in a main scanning direction is formed to be an effective light-receiving surface that varies according to a sub scanning direction.

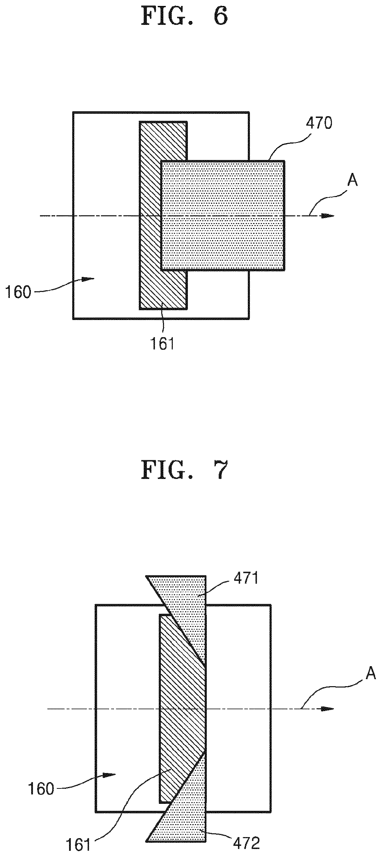

FIG. 6 is a schematic view illustrating a synchronization detector according to an exemplary embodiment. Referring to FIG. 6, a blocking member 470 is positioned in a center of the light-receiving part 161 of the synchronization sensor 160. A width of an effective light-receiving surface of the synchronization sensor 160 in a main scanning direction is short in the center of the light-receiving part 161 and long at an edge of the light-receiving part 161 according to the above-described arrangement of the blocking member 470.

FIG. 7 is a schematic view illustrating a synchronization detector according to an exemplary embodiment. Referring to FIG. 7, blocking members 471 and 472 are formed in a triangular shape to cover a part of the light-receiving part 161 of the synchronization sensor 160. Therefore, a width of an effective light-receiving surface of the synchronization sensor 160 in a main scanning direction becomes continuously shorter from a center of the light-receiving part 161 toward an edge of the light-receiving part 161.

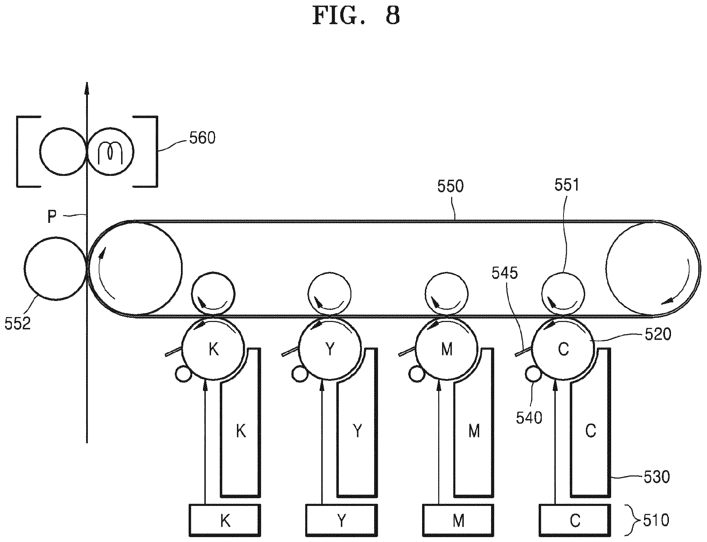

FIG. 8 is a schematic view illustrating an electrophotographic image forming apparatus using light scanning units 510, according to an exemplary embodiment.

Referring to FIG. 8, the electrophotographic image forming apparatus includes the light scanning units (light scanners) 510, photosensitive drums 520, developers 530, charging rollers 540, cleaning units 545, an intermediate transfer belt 550, first transfer rollers 551, a second transfer roller 552, and a fixing unit 560.

The light scanning units 510, the photosensitive drums 520, and the developers 530 are provided according to colors in order to print a color image. The light scanning units 510 provided according to colors may be light scanning units 100 described in the previous exemplary embodiments. The light scanning units 510 respectively scan four light beams onto the four photosensitive drums 520.

The photosensitive drums 520 are examples of image holding bodies and are formed by forming photosensitive layers having predetermined thicknesses on outer surfaces of cylindrical metal pipes. Although not shown in FIG. 8, photosensitive belts having belt shapes may be used as image holding bodies. Outer surfaces of the photosensitive drums 520 are to-be-scanned surfaces as described in the previous exemplary embodiments. As the light scanning units 510 expose light beams onto the to-be-scanned surfaces of the photosensitive drums 520 and the to-be-scanned surfaces move in a sub scanning direction according to rotations of the photosensitive drums 520, 2-dimensional (2D) electrostatic latent images are formed on the to-be-scanned surfaces of the photosensitive drums 520.

Electrostatic latent images respectively corresponding to image information of black (K), magenta (M), yellow (Y), and cyan (C) colors are formed on the four photosensitive drums 520. The four developers 530 respectively feed K, M, Y, and C color toners to the photosensitive drums 520 to form K, M, Y, and C color toner images.

The charging rollers 540 are provided on an upper part of outer surfaces of the photosensitive drums 520, which are exposed to light beams by the light scanning units 510. The charging rollers 540 are examples of chargers which rotate in contact with the photosensitive drums 520 to charge outer surfaces of the photosensitive drums 520 with uniform potentials. A charging bias is applied to the charging rollers 540. Corona chargers (not shown) may be used instead of the charging rollers.

The intermediate transfer belt 550 is an example of a intermediate transfer structure, which transfers the toner images of the photosensitive drums 520 to a printing medium P. A intermediate transfer drum may be used as a intermediate transfer structure instead of the intermediate transfer belt 550. The intermediate transfer belt 550 travels in contact with the photosensitive drums 520. The K, M, Y, and C color toner images formed on the photosensitive drums 520 overlap with one another and then are transferred to the intermediate transfer belt 550 by a first transfer bias applied to first transfer rollers 551. Cleaning units 545 are provided on parts of the outer surfaces of the photosensitive drums 520 that are positioned under locations in which transferring is performed. Toner images remaining after the toner images are transferred are moved by the cleaning units 545. The toner images transferred to the intermediate transfer belt 550 are transferred onto the printing medium P through a second transfer bias applied to the second transfer roller 552.

The printing medium P, onto which the toner images are transferred, is transferred to the fixing unit 560. The toner images transferred onto the printing medium P receive heat and pressure from a fixing nip of the fixing unit 560 to be fixed onto the printing medium P, thereby completing printing.

As described above, the electrophotographic image forming apparatus of an exemplary embodiment forms a color image, but embodiments are not limited thereto. For example, if a single color image that is black and white is formed, the electrophotographic image forming apparatus may include only one light scanning unit 510, one photosensitive drum 520, and one developer 530. In addition, other elements of the electrophotographic image forming apparatus except the light scanning units 510, i.e., the photosensitive drums 520, the developers 530, the intermediate transfer belt 550, the first and second transfer rollers 551 and 552, and the fixing unit 560, have been described as examples of printing units which transfer toner images onto a printing medium according to an electrophotographic method. Therefore, a well-known printing unit may be applied to the electrophotographic image forming apparatus according to an embodiment.

In a light scanning unit, a method of detecting a failure of a synchronization signal, and an electrophotographic image forming apparatus using the light scanning unit, according to exemplary embodiments, equipment such as an additional infrared camera module is not used. Therefore, manufacturing cost is increased without increasing the number of work processes. Although an optical axis of a synchronization detector of the light scanning unit is changed due to user environment changes and external factors, the light scanning unit is stably produced. Also, a failure possibility caused by human error of a worker is basically prevented, and a current optical axis is measured in real time to determine a failure.

While exemplary embodiments been particularly shown and described, it will be understood by those of ordinary skill in the art that various changes in form and details may be made therein without departing from the scope of the present disclosure as defined by the following claims.

## Claims

1. A light scanning unit (100) comprising:
a light source (110) to emit a light beam according to an image signal;
a light deflector (130) to deflect and scan the light beam emitted from the light source in a main scanning direction;
a synchronization sensor (160, 360) comprising a light-receiving surface (161, 361) to receive a portion of the light beam deflected and scanned from the light deflector to generate a synchronization signal of the light scanning unit, wherein the light-receiving surface comprises a front side and an end side with respect to an advancing path of the light beam in the main scanning direction; and
at least one blocking member (170, 470, 471, 472) disposed at the end side of the light-receiving surface so as to shield a part of the light receiving surface to define an effective light-receiving surface whose width in the main scanning direction varies according to a sub scanning direction;
wherein a boundary of the front side of the effective light-receiving surface is orthogonal to the main scanning direction of the light beam,
wherein the at least one blocking member is arranged such that the effective light receiving surface is symmetrically formed in a sub scanning direction with respect to a central line of an advancing path of the light beam in the main scanning direction,
wherein the boundary of the front side of the effective light-receiving surface of the synchronization sensor with respect to the advancing direction of the light beam in the main scanning direction is a straight line, and
wherein a boundary of an end side of the effective light-receiving surface of the synchronization sensor with respect to the advancing direction of the light beam in the main scanning direction is stepped, or wherein the at least one blocking member comprises a first slanted blocking member part (471) positioned at a first side of the light receiving surface and a second slanted blocking member part (472) positioned at a second side of the light receiving surface opposite to the first side, and wherein the first slanted blocking member part and the second slanted blocking member part are spaced apart from each other in the sub scanning direction such that a portion of the end of the effective light receiving surface is orthogonal to the main scanning direction of the light beam.

2. The light scanning unit of any one of claim 1, wherein the at least one blocking member is formed as a single body with a housing (180) of the light scanning unit or with the synchronization sensor.

3. A method of detecting a failure of a synchronization signal of a light scanning unit of any one of claims 1 or 2, the method comprising:
driving the light source (S210);
driving the light deflector (S220);
receiving the portion of the light beam deflected and scanned from the light deflector to generate the synchronization signal (S230); and
if a width of the generated synchronization signal is smaller than a reference value, determining the generated synchronization signal as a failure (S260), and if the width of the generated synchronization signal exceeds the reference value, determining the generated synchronization signal as high quality (S270),
wherein the width of the synchronization signal corresponds to a width of a part of the effective light-receiving surface through which the light beam has scanned.

4. The method of claim 3, wherein the reference value is equal to or greater than a width of the synchronization signal corresponding to a width of the effective light-receiving surface that is reduced by a blocking member in the main scanning direction and is smaller than a width of the synchronization signal corresponding to a width of the effective light-receiving surface that is not covered with the blocking member.

5. An electrophotographic image forming apparatus comprising:
an image holding body;
a light scanning unit of any one of claims 1 through 2, the light scanning unit being to scan light beams onto a to-be-scanned surface of the image holding body to form an electrostatic latent image; and
a developer (530) which feeds toner to the electrostatic latent image formed on the image holding body to develop the electrostatic latent image.

## Patentansprüche

1. Lichtabtasteinheit (100), die umfasst:
eine Lichtquelle (110), um einen Lichtstrahl gemäß einem Bildsignal zu emittieren;
eine Lichtablenkungsvorrichtung (130), um den von der Lichtquelle emittierten Lichtstrahl in einer Hauptabtastrichtung abzulenken und abzutasten;
einen Synchronisationssensor (160, 360), der eine lichtempfangende Oberfläche (161, 361) umfasst, um einen Abschnitt des von der Lichtablenkungsvorrichtung abgelenkten und abgetasteten Lichtstrahls zu empfangen, um ein Synchronisationssignal der Lichtabtasteinheit zu erzeugen, wobei die lichtempfangende Oberfläche eine Vorderseite und eine Endseite in Bezug auf einen Fortbewegungsweg des Lichtstrahls in der Hauptabtastrichtung umfasst; und
wenigstens ein Blockierelement (170, 470, 471, 472), das an der Endseite der lichtempfangenden Oberfläche angeordnet ist, um einen Teil der lichtempfangenden Oberfläche abzuschirmen um eine effektive lichtempfangende Oberfläche zu definieren, deren Breite in der Hauptabtastrichtung gemäß einer Unterabtastrichtung variiert;
wobei eine Abgrenzung der Vorderseite der effektiven lichtempfangenden Oberfläche orthogonal zu der Hauptabtastrichtung des Lichtstrahls ist,
wobei das wenigstens eine Blockierelement derart eingerichtet ist, dass die effektive lichtempfangende Oberfläche in einer Unterabtastrichtung in Bezug auf eine Mittellinie eines Fortbewegungsweges des Lichtstrahls in der Hauptabtastrichtung symmetrisch ausgebildet ist,
wobei die Abgrenzung der Vorderseite der effektiven lichtempfangenden Oberfläche des Synchronisationssensors in Bezug auf die Fortbewegungsrichtung des Lichtstrahls in der Hauptabtastrichtung eine gerade Linie ist und
wobei eine Abgrenzung einer Endseite der effektiven lichtempfangenden Oberfläche des Synchronisationssensors in Bezug auf die Fortbewegungsrichtung des Lichtstrahls in der Hauptabtastrichtung abgestuft ist oder wobei das wenigstens eine Blockierelement ein erstes geneigtes Blockierelementteil (471), das an einer ersten Seite der lichtempfangenden Oberfläche positioniert ist, und ein zweites geneigtes Blockierelementteil (472), das an einer der ersten Seite gegenüberliegenden zweiten Seite der lichtempfangenden Oberfläche positioniert ist, umfasst und wobei das erste geneigte Blockierelementteil und das zweite geneigte Blockierelementteil in der Unterabtastrichtung derart voneinander beabstandet sind, dass ein Abschnitt des Endes der effektiven lichtempfangenden Oberfläche orthogonal zu der Hauptabtastrichtung des Lichtstrahls ist.

2. Lichtabtasteinheit nach einem der Ansprüche 1, wobei das wenigstens eine Blockierelement als ein einzelner Körper mit einem Gehäuse (180) der Lichtabtasteinheit oder mit dem Synchronisationssensor ausgebildet ist.

3. Verfahren zum Erfassen eines Ausfalls eines Synchronisationssignals einer Lichtabtasteinheit nach einem der Ansprüche 1 oder 2, wobei das Verfahren umfasst:
Antreiben der Lichtquelle (S210);
Antreiben der Lichtablenkungsvorrichtung (S220);
Empfangen des Abschnitts des Lichtstrahls, der von der Lichtablenkungsvorrichtung abgelenkt und abgetastet wird, um das Synchronisationssignal zu erzeugen (S230); und
sofern eine Breite des erzeugten Synchronisationssignals kleiner als ein Bezugswert ist, Bestimmen des erzeugten Synchronisationssignals als ein Ausfall (S260), und sofern die Breite des erzeugten Synchronisationssignals den Bezugswert überschreitet, Bestimmen des erzeugten Synchronisationssignals als von hoher Qualität (S270),
wobei die Breite des Synchronisationssignals einer Breite eines Teils der effektiven lichtempfangenden Oberfläche entspricht, durch die der Lichtstrahl abgetastet hat.

4. Verfahren nach Anspruch 3, wobei der Bezugswert gleich oder größer als eine Breite des Synchronisationssignals ist, die einer Breite der effektiven lichtempfangenden Oberfläche entspricht, die durch ein Blockierelement in der Hauptabtastrichtung verringert ist und kleiner als eine Breite des Synchronisationssignals ist, die einer Breite der effektiven lichtempfangenden Oberfläche entspricht, die nicht mit dem Blockierelement bedeckt ist.

5. Elektrofotografische Bilderzeugungsvorrichtung, die umfasst:
einen Bildhaltekörper;
eine Lichtabtasteinheit nach einem der Ansprüche 1 bis 2, wobei die Lichtabtasteinheit dazu dient, Lichtstrahlen auf eine abzutastende Oberfläche des Bildhaltekörpers abzutasten, um ein elektrostatisches latentes Bild auszubilden; und
einen Entwickler (530), der dem auf dem Bildhaltekörper ausgebildeten elektrostatischen latenten Bild Toner zuführt, um das elektrostatische latente Bild zu entwickeln.

## Revendications

1. Unité de balayage de lumière (100) comprenant :
une source de lumière (110) destinée à émettre un faisceau de lumière selon un signal d'image ;
un déflecteur de lumière (130) destiné à dévier et balayer le faisceau de lumière émis par la source de lumière dans une direction de balayage principale ;
un capteur de synchronisation (160, 360) comprenant une surface réceptrice de lumière (161, 361) destinée à recevoir une partie du faisceau de lumière dévié et balayé à partir du déflecteur de lumière afin de générer un signal de synchronisation de l'unité de balayage de lumière, la surface réceptrice de lumière comprenant une face avant et une face d'extrémité par rapport à un trajet de progression du faisceau de lumière dans la direction de balayage principale ; et
au moins un élément bloquant (170, 470, 471, 472) disposé sur la face d'extrémité de la surface réceptrice de lumière de manière à protéger une partie de la surface réceptrice de lumière afin de définir une surface réceptrice de lumière efficace dont la largeur dans la direction de balayage principale varie en fonction d'une direction de balayage secondaire ;
une limite de la face avant de la surface réceptrice de lumière efficace étant perpendiculaire à la direction de balayage principale du faisceau de lumière, l'au moins un élément bloquant étant agencé de sorte que la surface réceptrice de lumière efficace soit formée symétriquement dans une direction de balayage secondaire par rapport à une ligne centrale d'un trajet de progression du faisceau de lumière dans la direction de balayage principale, la limite de la face avant de la surface réceptrice de lumière efficace du capteur de synchronisation par rapport à la direction de progression du faisceau de lumière dans la direction de balayage principale étant une ligne droite, et une limite d'une face d'extrémité de la surface réceptrice de lumière efficace du capteur de synchronisation par rapport à la direction de progression du faisceau de lumière dans la direction de balayage principale étant étagée, ou l'au moins un élément bloquant comprenant une première partie d'élément bloquant inclinée (471) positionnée sur une première face de la surface réceptrice de lumière et une seconde partie d'élément bloquant inclinée (472) positionnée sur une seconde face de la surface réceptrice de lumière opposée à la première face, et la première partie d'élément bloquant inclinée et la seconde partie d'élément bloquant inclinée étant espacées l'une de l'autre dans la direction de balayage secondaire, de telle sorte qu'une partie de l'extrémité de la surface réceptrice de lumière efficace est perpendiculaire à la direction de balayage principale du faisceau de lumière.

2. Unité de balayage de lumière selon une quelconque revendication 1, l'au moins un élément bloquant étant formé d'un seul tenant avec un boîtier (180) de l'unité de balayage de lumière ou avec le capteur de synchronisation.

3. Procédé de détection d'un échec d'un signal de synchronisation d'une unité de balayage de lumière selon l'une quelconque des revendications 1 ou 2, le procédé comprenant :
la commande de la source de lumière (S210) ;
la commande du déflecteur de lumière (S220) ;
la réception de la partie du faisceau de lumière dévié et balayé depuis le déflecteur de lumière pour générer le signal de synchronisation (S230) ; et
si une largeur du signal de synchronisation généré est inférieure à une valeur de référence, la détermination du signal de synchronisation généré comme étant un échec (S260), et si la largeur du signal de synchronisation généré dépasse la valeur de référence, la détermination du signal de synchronisation généré comme étant de haute qualité (S270), la largeur du signal de synchronisation correspondant à une largeur d'une partie de la surface réceptrice de lumière efficace à travers laquelle le faisceau de lumière a effectué un balayage.

4. Procédé selon la revendication 3, la valeur de référence étant supérieure ou égale à une largeur du signal de synchronisation correspondant à une largeur de la surface réceptrice de lumière efficace qui est réduite par un élément bloquant dans la direction de balayage principale et étant inférieure à une largeur du signal de synchronisation correspondant à une largeur de la surface réceptrice de lumière efficace qui n'est pas recouverte par l'élément bloquant.

5. Appareil de formation d'image électrophotographique comprenant :
un corps de support d'image ;
une unité de balayage de lumière selon l'une quelconque des revendications 1 à 2, l'unité de balayage de lumière étant destinée à balayer des faisceaux de lumière sur une surface à balayer du corps de support d'image pour former une image latente électrostatique ; et
un développeur (530) qui alimente l'image électrostatique latente formée sur le corps de support d'image en toner pour développer l'image électrostatique latente.
